# EUROPEAN PATENT SPECIFICATION

(11) **EP 4 458 197 B1**
(45) Date of publication and mention of the grant of the patent: **19.08.2026**
(21) Application number: 24173641.2
(22) Date of filing: 01.05.2024
(51) Int. Cl.: A42B 3/04, G02B 23/12

(54) **MULTI-POSITION HELMET MOUNT PIVOT HINGE AND HELMET MOUNT APPARATUS EMPLOYING SAME**
HELMMONTAGESCHWENKSCHARNIER MIT MEHREREN POSITIONEN UND HELMMONTAGEVORRICHTUNG DAMIT
CHARNIÈRE À PIVOT DE MONTAGE DE CASQUE MULTI-POSITION ET APPAREIL DE MONTAGE DE CASQUE L'UTILISANT

(30) Priority: 01.05.2023 US 202363463171 P
(43) Date of publication of application: 06.11.2024
(73) Proprietor: Wilcox Industries Corp., Newington, NH 03801 (US)
(72) Inventor: TEETZEL, James W., Newington, NH 03801 (US); LEMIRE, Gary M., Newington, NH 03801 (US)
(74) Representative: FRKelly

(56) References cited:
- US-A1- 2010 180 364
- US-A1- 2011 145 981
- US-A1- 2011 239 354

## Description

### BACKGROUND

The present invention relates to pivoting helmet mounts and, in particular, to an improved pivot hinge for a helmet mount apparatus and a helmet mount apparatus employing same.

Helmets, such as military and law-enforcement helmets, with front shrouds for attaching helmet mount assemblies are known, such as disclosed in commonly owned U.S. Patent No. 8,739,313 (published as U.S. Patent Application Publication No. US2011/145981A1). These helmet mount assemblies are configured to support a night vision device, optical device, or other viewing device in front of one or both eyes of a user. Such helmet mount assemblies commonly include a pivot mechanism to allow the viewing device to be pivoted between a deployed position in front of the user's eyes when the viewing device is in use and a stowed position above the user's line of sight when the viewing device is not deployed, e.g., to allow the user to perform a different task or respond to a changing situation.

One type of pivot assembly or hinge utilizes a locking mechanism for holding the pivot assembly in the selected one of deployed and stowed positions. Such locking pivot assemblies typically utilize a mechanical actuator, such as a push button, and are advantageous in that they provide positive, locking retention of the pivot assembly in the selected position.

Another type of pivot assembly utilizes a force-to-overcome mechanism for securing the pivot assembly in a selected one of the deployed and stowed positions. Such pivot assemblies create a certain amount of resistance in the stowed and deployed positions and require the user to manually apply a certain amount of force to overcome the resistance in order to move the viewing device from the deployed position to the stowed position and vice versa. Such systems allow pivoting movement between the deployed and stowed positions in a rapid manner since manipulation of an unlocking actuator is not necessary. However, such pivot mechanisms do not have a true locking mechanism that will hold the viewing device securely in place in the deployed and stowed positions and may allow the pivot assembly to become dislodged and shift its position in certain scenarios, such as during a hard parachute landing, collisions or impacts to the helmet, helmet mount apparatus, viewing device, or user, contact with objects such as low branches or door frames, rapid movement such as during evasive maneuvers, and the like.

The present disclosure contemplates a new and improved pivot assembly for a helmet mount apparatus and a helmet mount apparatus employing same which overcome the above-referenced problems and others.

### SUMMARY

The present inventors have recognized that it would be desirable to provide a pivot hinge or subsystem for a helmet mount apparatus and a helmet mount apparatus employing same with an improved pivot mechanism for attaching a viewing device that provides positive, locking retention in the stowed and deployed positions, while also providing a third, partially stowed position which is intermediate the stowed and deployed positions. The pivot assembly includes a detent mechanism configured to hold the viewing device in the intermediate (i.e., partially flipped up) position. The detent mechanism functions as a force to overcome type retention system which secures the viewing device in the intermediate position until the user pulls down to re-deploy the viewing device or pushes up to stow the viewing device, without the need to press the push button actuator.

In one aspect, a pivot assembly is provided for pivoting a viewing device in relation to a helmet wherein the pivot assembly includes a connection plate configured to be coupled to a helmet interface assembly. A hinge barrel is pivotable about a pivot axis in relation to the connection plate among (a) a deployed position in which the hinge barrel is held relative to the connection plate in positive, locking retention; (b) a stowed position in which the hinge barrel is held relative to the connection plate in positive, locking retention; and (c) an intermediate position between the deployed and stowed positions, wherein the hinge barrel is held relative to the connection plate by a threshold retentive force and wherein displacement of the hinge barrel from the intermediate position relative to the connection plate requires application of an actuating force which exceeds the threshold retentive force.

In a more limited aspect, the pivot assembly includes first and second hinge knuckles disposed on opposing transverse sides of the connection plate, the hinge barrel disposed between the first and second hinge knuckles and defining a cylindrical bore along the pivot axis. A first aperture is formed in a sidewall of the hinge barrel which provides access to the cylindrical bore. A pivot arm is coupled to the hinge barrel and is configured to rotate with the hinge barrel about the pivot axis. A detent bore extends radially through the pivot arm and communicating with the cylindrical bore. A bushing includes a cylindrical body and an axially-extending bore and is disposed within the cylindrical bore of the hinge barrel. The bushing includes a recess formed on the cylindrical body and a second aperture extends radially from an outer surface of the cylindrical body to the axially-extending bore, wherein the second aperture is elongated in the axial direction and has a preselected axial extent. A detent assembly received within the detent bore, the detent assembly having a resilient protrusion, the resilient protrusion complementary with the recess. A pivot rod is telescopically received within the axially-extending bore of the bushing. A biasing spring is disposed within the axially-extending bore and is configured to urge the pivot rod in an outward direction along the pivot axis. A positioning pin is secured to said pivot rod and passes through the second aperture and extends at least partially into the first aperture. The second aperture is configured to limit telescoping movement between the pivot rod and the bushing to said axial extent. The first aperture is configured to constrain a range of rotational movement of the hinge barrel in relation to the bushing when the hinge barrel is pivoted between the deployed, intermediate, and stowed positions.

In another more limited aspect, the detent assembly comprises a detent member received within the detent bore, the detent member having a tongue disposed on an upper surface and a threaded set screw that engages internal threads within the detent bore. At least one detent spring member is captured within the detent bore between the detent member and the threaded set screw, such that the at least one spring member urges the detent member away from the threaded set screw and toward the bushing.

In another more limited aspect, the pivot rod comprises a shaft portion received within the axially-extending bore and a manually actuatable push button.

In another more limited aspect, the first aperture comprises a first segment which extends parallel to the pivot axis and having a first end and a second end opposite the first end and a second segment which extends parallel to the pivot axis and having a first end and a second end opposite the first end, the second segment axially aligned with the first segment and angularly spaced apart from the first segment. A third segment extends transversely with respect to the pivot axis, the third segment intersecting with the second end of the first segment and the second end of the second segment.

In another more limited aspect, the biasing spring is configured to urge the positioning pin toward the first end of the first segment when the hinge barrel is pivoted to the deployed position and the biasing spring is configured to urge the positioning pin toward the first end of the second segment when the hinge barrel is pivoted to the stowed position.

In another more limited aspect, the resilient protrusion is configured to engage the recess when the hinge barrel is manually pivoted to the intermediate position, wherein the positioning pin is disposed within the third segment at a position intermediate the second end of the first segment and the second end of the second segment.

In another more limited aspect, the first segment is tapered to narrow toward the first end of the first segment and the second segment is tapered to narrow toward the first end of the second segment.

In another more limited aspect, the pivot assembly further includes a carriage assembly coupled to the hinge barrel, the carriage assembly configured to interface with the viewing device.

In another more limited aspect, the carriage assembly comprises one or more rail members secured to the hinge barrel and a sliding carriage configured to be selectively positioned on the one or more rail members for adjusting a distance between the viewing device and an eye of a user.

In another more limited aspect, the pivot assembly further includes a helmet interface assembly coupled to the connection plate, the helmet interface assembly configured to secure the pivot assembly to a helmet.

In another more limited aspect, the helmet interface assembly includes a front interface plate disposed coupled to the connection plate, the front interface plate includes vertical adjustment rails defining a channel and a cam lock member disposed on a rear, helmet-facing side of the connection plate, the cam lock member received within the channel. A vertical adjustment lever is disposed on a forward facing side of the connection plate and is secured to the cam lock member and is rotatable between a locked position and an unlocked position. The cam lock member is configured to slide within the channel when the lever is in the unlocked position and to be held in place within the channel when the lever is in the locked position.

In another more limited aspect, the helmet interface assembly includes a breakaway mechanism configurable between a non-breakaway configuration and a breakaway configuration, wherein the helmet interface assembly is configured to securely lock to a mounting fixture disposed on the helmet when the breakaway mechanism is in the non-breakaway configuration and wherein the helmet interface assembly is configured to separate from the mounting fixture upon application of a predetermined force when the breakaway mechanism is in the breakaway configuration.

In another more limited aspect, the mounting fixture is selected from the group consisting of a three-hole shroud and a one hole shroud.

In another more limited aspect, the pivot assembly further includes a tilt adjustment assembly for adjusting a tilt position of the viewing device relative to an eye of a user.

In a further aspect, a helmet mount apparatus for a viewing device includes a helmet interface assembly configured to engage with a helmet, a pivot assembly of coupled to the helmet interface assembly, and a carriage assembly coupled to the pivot assembly, the carriage assembly configured to engage with the viewing device. The pivot assembly includes a connection plate configured to be coupled to a helmet interface assembly and a pivotable hinge barrel. The hinge barrel is pivotable about a pivot axis in relation to the connection plate among (a) a deployed position in which the hinge barrel is held relative to the connection plate in positive, locking retention; (b) a stowed position in which the hinge barrel is held relative to the connection plate in positive, locking retention; and (c) an intermediate position between the deployed and stowed positions, wherein the hinge barrel is held relative to the connection plate by a threshold retentive force and wherein displacement of the hinge barrel from the intermediate position relative to the connection plate requires application of an actuating force which exceeds the threshold retentive force.

In a more limited aspect, the helmet mount apparatus is provided in combination with the viewing device.

Various advantages and benefits of the present invention will become apparent to those of ordinary skill in the art upon reading and understanding the following detailed description of the preferred embodiments.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of a helmet mount apparatus according to an exemplary embodiment of the present invention attached to a helmet, wherein the helmet mount apparatus is in the deployed position.
FIGS. 2-4 are enlarged, fragmentary side views of the helmet and helmet mount apparatus appearing in FIG. 1, with the helmet mount apparatus in the deployed position, intermediate, and stowed positions, respectively.
FIG. 5 is an isometric view of the helmet mount apparatus appearing in FIG. 1 taken generally from the front and right side.
FIG. 6 is a partially exploded isometric view of the helmet mount apparatus appearing in FIG. 5.
FIG. 7 is an enlarged isometric view of the pivot assembly.
FIG. 8 is an exploded isometric view of the pivot assembly appearing in FIG. 7.
FIG. 9 is a front view of the pivot assembly appearing in FIG. 7.
FIG. 10 is a side cross-sectional view taken along the lines 10 - - 10 appearing in FIG. 9.
FIG. 11 is an isometric view of the pivot assembly cylinder and tilt adjustment subassembly taken generally from the top and right side.
FIGS. 12 and 13 are a schematic view of two exemplary shaped openings in the cylindrical housing of the hinge barrel member.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected, whether the components are attached, joined, manufactured separately, or integrated as a single coherent unit. Such terms encompass configurations where components are formed separately and subsequently connected as well as configurations where components are integrally formed or exist as a monolithic structure without distinct connecting interfaces.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

In embodiments, a helmet mount apparatus for mounting an associated viewing device on a helmet includes a first pivoting segment for attachment to the helmet and a second pivoting segment for attachment to the associated viewing device. The second pivoting segment is pivotable relative to the first pivoting segment for selectively supporting the associated viewing device in a first, operational or deployed position before the eyes of a user donning the helmet and a second, stowed position above a line of sight of a viewer donning the helmet. A locking mechanism includes an actuator manually depressible by the user for pivoting the second pivoting segment relative to the first pivoting segment between the first position and the second position. A force to overcome mechanism is configured to secure the second pivoting segment relative to the first pivoting segment at a third, intermediate position which is intermediate the first and second positions, wherein the second pivoting segment is configured to move relative to the first pivoting segment from the third position to the first position upon manual application of force in a first rotational direction and wherein the second pivoting segment is configured to move relative to the first pivoting segment from the third position to the second position upon manual application of force in a second rotational direction which is opposite the first rotational direction.

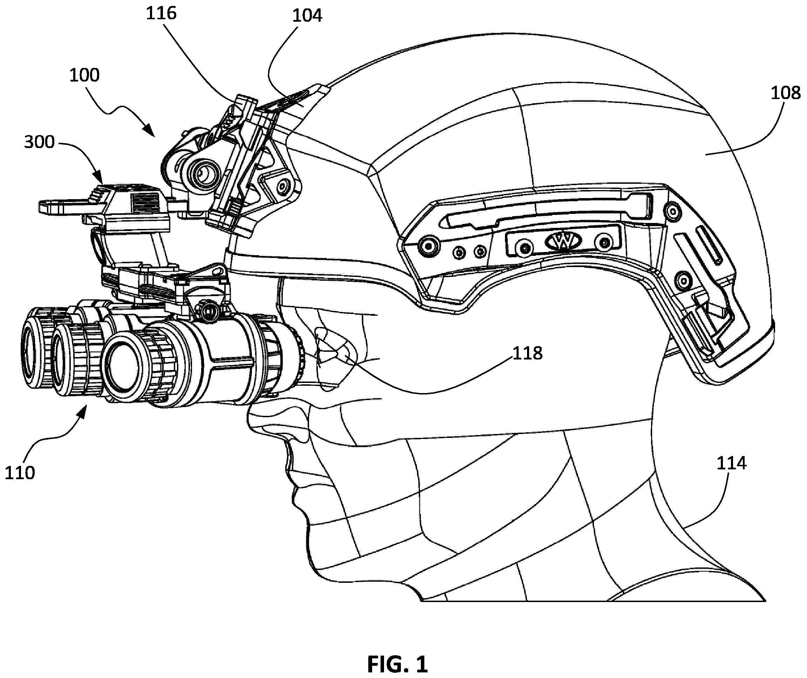

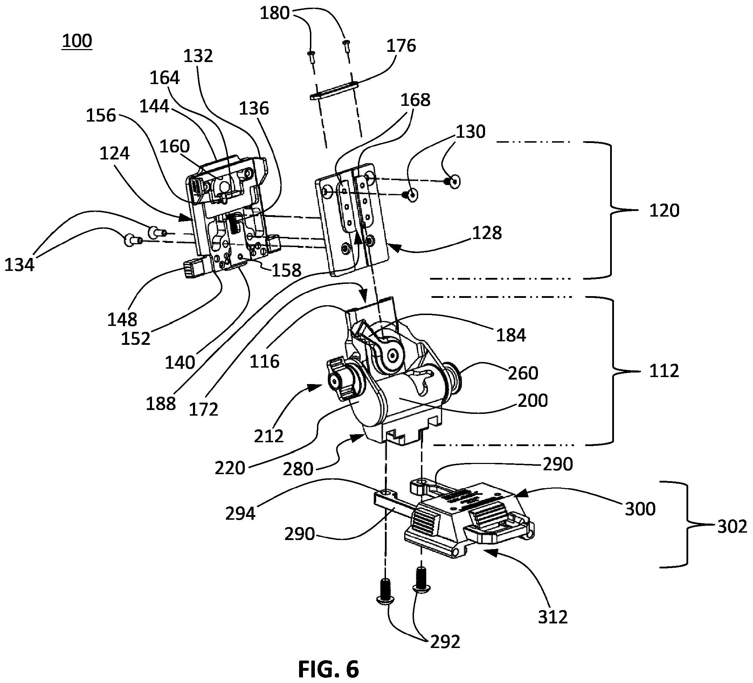

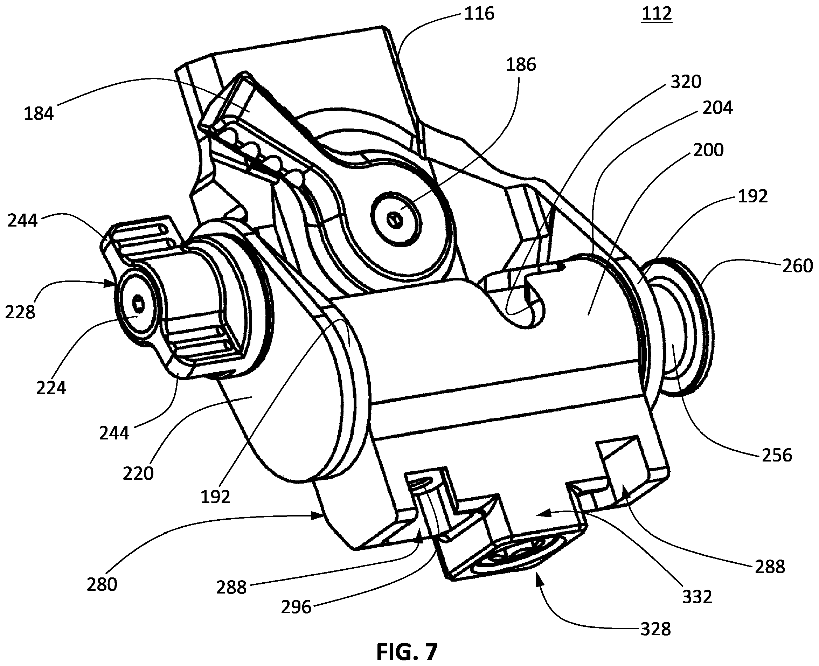

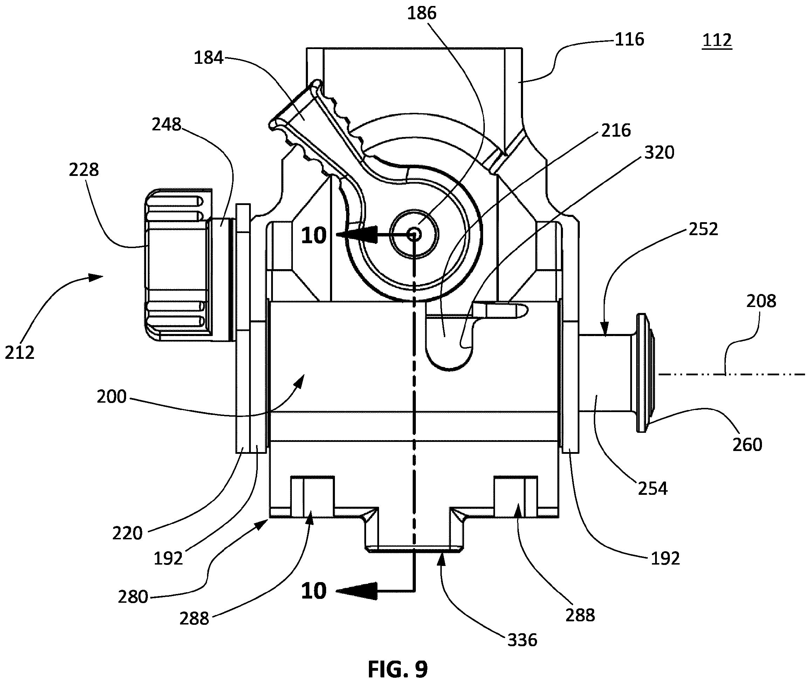

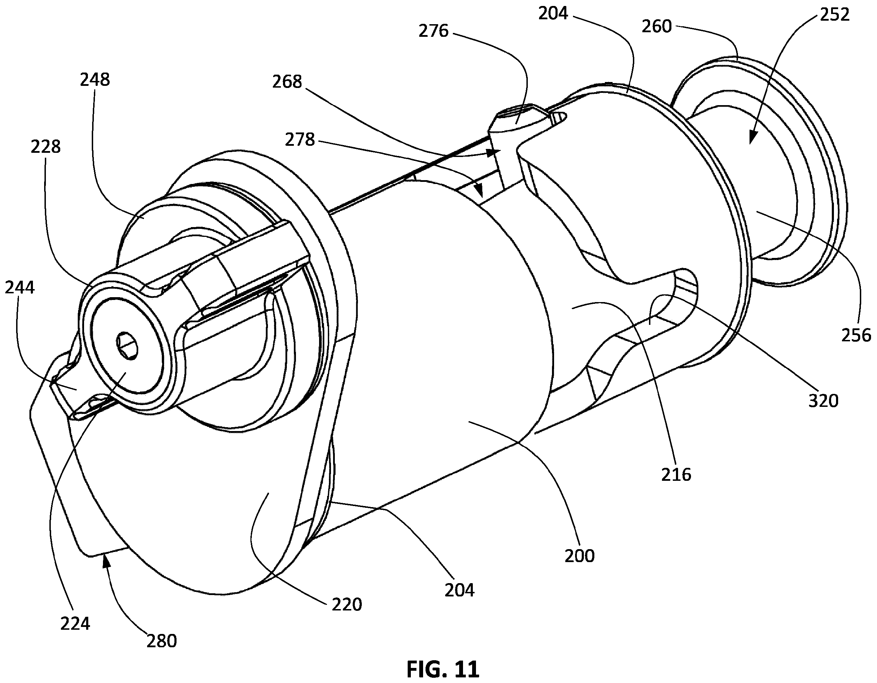

Referring now to the drawings FIGS. 1-13, wherein like reference numerals refer to like or analogous components throughout the several views, there appears an exemplary embodiment helmet mount apparatus **100** of the present disclosure. The helmet mount apparatus **100** is releasably attached to a front shroud **104** which, in turn is attached to a front portion of a helmet **108.** In embodiments, the front shroud is a Wilcox L4 shroud available from Wilcox Industries Corp. of Newington, NH. Other shrouds **104** are also contemplated, including three-hole shrouds, single-hole shrouds, and others.

In embodiments, the helmet **108** is an Advanced Combat Helmet (ACH), Enhanced Combat Helmet (ECH), Modular Integrated Communications Helmet (MICH), Ballistic Combat Helmet (BCH), among others. A viewing device **110,** in turn, is attached to the helmet mount apparatus **100** and supported by the helmet mount apparatus **100** in front of the eye(s) **118** of a user **114.** In the illustrated embodiment, the viewing device is a panoramic night vision binocular device such as a Ground Panoramic Night Vision Goggle (GPNVG) available from L3Harris Technologies, Inc. It will be recognized that other viewing devices can be employed, such as monocular and binocular night vision devices, enhanced night vision devices, other monocular and binocular optical and opto-electronic devices, cameras, displays including head up displays and virtual or augmented reality displays, and the like.

The helmet mount apparatus **100** includes a pivot assembly **112.** The pivot assembly **112** includes a connection plate **116** which is slidably coupled to a helmet interface assembly **120.** The helmet interface assembly **120** includes a rear interface plate **124** and a front interface plate **128.** The helmet interface assembly **120** defines a latching assembly that that engages with a complementary bracket or shroud on the front of the helmet and facilitates secures attachment and easy detachment. The rear interface plate **124** and a front interface plate **128** are secured via threaded fasteners **130** and **134.** In the depicted embodiment, the helmet interface assembly **120** includes a breakaway actuator **132** movable in the transverse direction between a breakaway position and a non-breakaway position. When the breakaway actuator **132** is in the non-breakaway position, the helmet mount apparatus **100** will be securely locked into the shroud **104.** When the breakaway actuator **132** is in the breakaway position, the helmet mount apparatus **100** will separate from the shroud **104** upon application of a sufficient force.

The rear interface plate **124** receives a spring or like tension member **136,** which bears against a movable, locking tongue member **140** disposed at a lower end of the rear interface plate **124.** The locking tongue **140** engages a complementary lower transverse groove or lip (not shown) formed in the shroud **104.** A fixed protrusion or tongue **144** extends from an upper end of the rear interface plate **124.** The fixed tongue **144** engages a complementary transverse upper groove or lip (not shown) formed in the shroud **104.**

An actuator bar **148** is received within a transverse channel **152** and is transversely slidable therein. The actuator bar **148** engages the locking tongue member **140** and is slidable between a locked position and a release position. Movement of the actuator bar **148** to the release position is translated to upward vertical movement of the locking tongue member **140,** e.g., by means of a mechanical linkage such as pin **158** riding in an angled elongate slot (not shown) in the actuator bar **148,** to move the tongue member **140** upward against the urging of the spring **136.** Movement of the actuator bar **148** to the locked position is translated to downward vertical movement of the locking tongue member **140.**

In operation, to secure the helmet mount apparatus **100** to the shroud **104,** the fixed tongue **144** is inserted into the upper slot on the shroud. The user also squeezes the actuator bar **148** against the urging of the spring **136** which retracts the lower movable tongue **140.** The assembly **120** is then pressed into place on the shroud **104** and the actuator bar **148** is released, wherein the locking tongue **140** moves downward at the urging of the spring **136** to the engaged position with the lower groove or lip.

In operation, to select the non-breakaway configuration the breakaway actuator **132** is moved to the non-breakaway position. A tooth **156** is coupled to the locking tongue member **140** and rides along a profiled edge **164** of a slot or opening **160** in the breakaway actuator **132** to adjust a vertical position of the tongue **140.** In the non-breakaway position, the tongue **140** is fully engaged and locked into with the lower slot on the shroud **104.**

In operation, to select the breakaway configuration the breakaway actuator **132** is moved to the breakaway position. The tooth **156** coupled to the locking tongue member **140** rides along the profiled edge **164** of the slot or opening **160** in the breakaway actuator **132** to adjust the vertical position of the tongue **140.** In the breakaway position, the tongue **140** is slightly elevated or withdrawn from the lower slot on the shroud **104** to allow the rear interface plate **124** to disengage from the shroud **104** upon application of a sufficient force.

In embodiments, the lower and front edge of the tongue member **140** and/or the upper and front edge of the lower slot in the shroud are chamfered, beveled, rounded, or the like. This provides a wedge action to move the tongue member **140** upward against the bias of the spring **136** when a separation force is applied to the helmet mount apparatus **100.** When the breakaway actuator **132** is in the non-breakaway position the locking tooth is disposed at a sufficient depth within the lower shroud slot such that non-chamfered edges of the tongue member **140** and lower slot in the shroud are contacting such that wedge action does not occur when a separation force is applied to the helmet mount apparatus **100.**

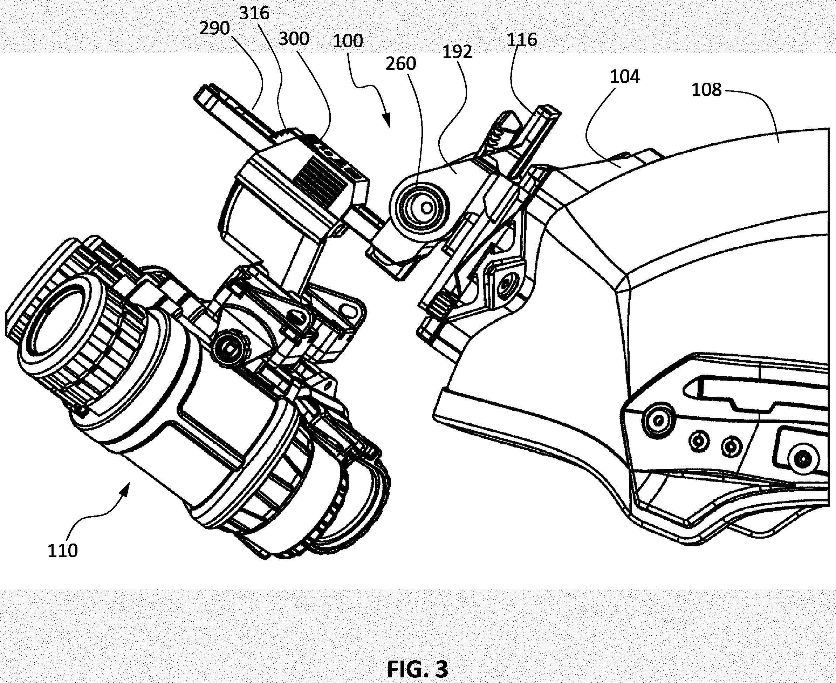

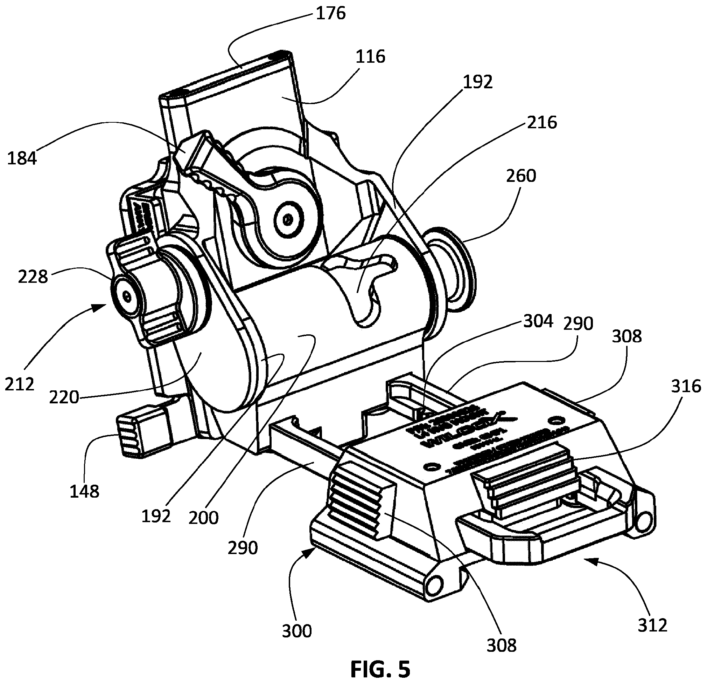

In embodiments, the helmet interface assembly **120** may be as described in commonly owned U.S. Patent No. 8,739,313. It will be recognized that other helmet interface assemblies are contemplated. For example, in certain embodiments, the helmet interface assembly **120** may be as shown in FIGS. 5A and 5B of the aforementioned U.S. Patent No. 8,739,313 and described by way of reference thereto. In alternative embodiments, the helmet interface assembly **120** may be a non-breakaway helmet interface assembly, e.g., as shown in FIGS. 3A and 3B of the aforementioned U.S. Patent No. 8,739,313 and described by way of reference thereto. The non-breakaway helmet interface assembly **120** may advantageously be selected in instances where it is desired to prevent inadvertent dislodging of an attached optical device from the helmet, e.g., where loss of the optical device is possible or where the operator may be subject to high acceleration or G forces.

The front interface plate **128** includes vertical adjustment rails **168** which are slidably received within a channel **172** formed on the rear side of the connection plate **116.** The connection plate **116** slides in the vertical direction with respect to the front interface plate **128** to allow the user to align the device **110** with the user's eye(s). Cover plates **176** are secured with threaded fasteners **180** to close the upper and lower ends of the connection plate **116.**

A vertical adjustment lever **184** on the front of the connection plate **116** is secured to a cam lock member (not shown) on the rear side of the connection plate **116** with a threaded fastener **186.** The lever **184** is rotatable between a locked position and an unlocked position. The cam lock member is received within a channel or slot **188** defined between the vertical adjustment rails **168.** When the lever **184** is pivoted to the unlocked position, the cam lock member is free to slide up and down within the channel **188** to provide a continuously adjustable vertical adjustment mechanism. When the assembly **112** is at a desired vertical position relative to the plate **128** (e.g., when the attached viewing device **110** is at the correct vertical position relative to the eyes of the user), the lever **184** is pivoted to the locked position. When the lever **184** is turned to the locked position, the cam lock member interacts with the locking rails **168** on the plate **128** to secure the vertical adjustment plate **116** in the desired position. In certain embodiments, the cam lock mechanism may be as described in the aforementioned U.S. Patent No. 8,739,313. Sliding movement of the connection plate **116** thereby enables adjustment of the vertical position of the viewing device **110** relative to a line of sight of the user **114.**

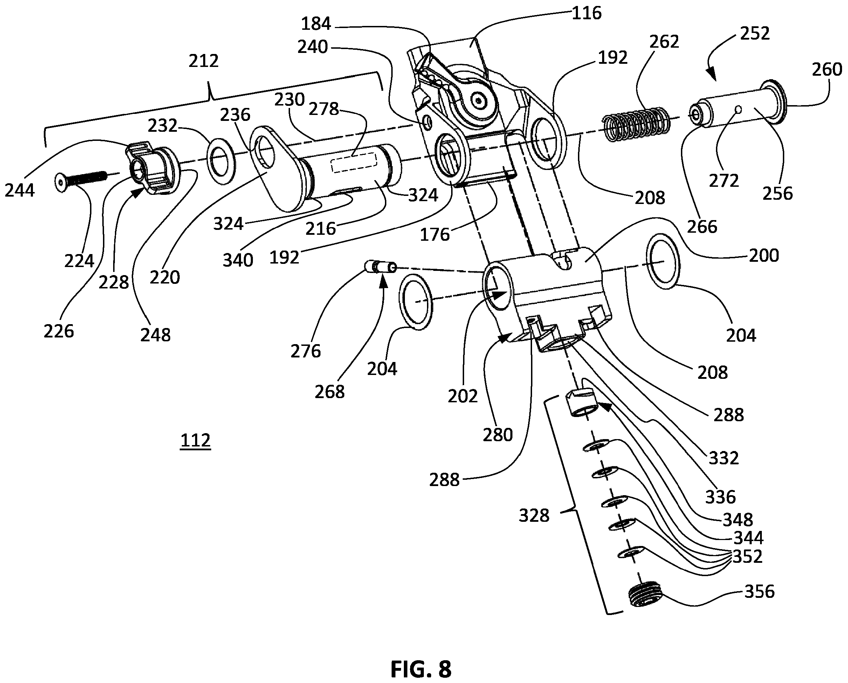

As best seen in FIG. 8, the pivot assembly **112** includes opposing first and second hinge knuckles **192** disposed on opposing transverse sides of the connection plate **116.** A hinge barrel member **200** is disposed between the first and second hinge knuckles **192.** Washers or wear spacers **204** may be disposed in between the ends of the hinge barrel member **200** and the first and second hinge knuckles **192.** The first and second hinge knuckles **192** and hinge barrel member **200** are aligned with a pivot axis **208.** The hinge barrel **200** defines a cylindrical bore **202** along the pivot axis **208.**

An angle or tilt adjustment knob sub-assembly **212** includes a generally cylindrical sleeve or bushing **216** and a tilt adjustment pivot arm **220.** A threaded fastener **224** passes through a clearance opening **226** in a tilt adjustment knob **228,** a washer **232,** which may be a spring washer or conical disc spring, and an elongate/curvate opening **236** in the tilt adjustment pivot arm **220.** The threaded fastener **224** engages a tapped opening **240** in the right hinge knuckle **192.** The tilt adjustment knob **228** includes a user actuator feature such as wings **244** on the outward facing side and an eccentric cam member **248** on the opposite side. In embodiments, the cam member **248** includes a cylindrical boss which is off-center with respect to the clearance opening **226.**

The cam member **248** runs within the opening **236** to allow rotation of the tilt adjustment pivot arm **220** in relation to the connection plate **116.** In certain embodiments, the opening **236** is configured to allow a range of about 10 to 20 degrees of pivoting movement, e.g., about 10, 11, 12, 13, 14, 15, 16, 17, 18, 19, or 20 degrees, preferably about 15 degrees. Manually rotating the knob **228** allows adjustment of the viewing device **110** to a desired tilt angle about a tilt pivot axis **230,** according to the user's eye position and a desired line of sight, whereby the tilt angle may then be secured in the desired position by tightening the knob **228.** In embodiments, the tilt adjustment subassembly is a friction tensioning mechanism with a constant force applied against the Bellville disc spring. The screw **224** is torqued to a developed value and rotationally secured in place. As the cammed knob **228** is rotated, the off center position of the screw **224** in relation to the cam body **248** causes the tilt angle to change. The adjusted position is held in place by friction.

A pivot pin **252** includes a pivot shaft **256** received within the bushing **216** and a push button **260.** A biasing spring **262** is received within the bushing **216** and is compressed and bears against a shoulder **266** of the shaft **256** to bias the pivot pin **252** outwardly. A positioning pin **268** is received within a bore **272** in the pivot rod shaft **256.** The positioning pin **268** includes a protruding head **276.** The positioning pin **268** passes through an elongate opening **278** (shown in hidden lines) disposed on the back of the bushing **216,** wherein the elongate opening **278** limits the extent of transverse travel of the pivot pin **252.** In embodiments, the elongate opening **278** may be tapered such that it narrows toward the left side and widens toward the right side. Such tapering provides a wedging action on the positioning pin **268** and provides ease of operation during the pivoting operation.

The hinge barrel **200** is pivotable about the pivot axis **208** with respect to the protruding head **276** and the connection plate **116.** A pivot arm **280** includes connection points **288** for receiving a pair of rails **290** extending in the horizontal position (when the helmet is worn by a user and the optical device is in the operation, i.e., flipped down, position). The connection points **288** may comprise keyed or geometrically shaped recesses complementary with the rail **290** proximal ends. Threaded fasteners **292** pass through clearance openings **294** in the rail **290** proximal ends and engage tapped openings **296** in the connection points **288.**

A sliding carriage **300** and the rail member **290** cooperate to form a carriage assembly **302.** The sliding carriage **300** is movable along the slide rails **290** to allow the user to horizontally position the viewing device **110** at a comfortable or desired focal distance from the eye(s) **118** of the operator **114.** At least one of the slide rails **290** contain a series of locking teeth **304** along its length for engaging an internal locking member such as a toothed member, pin, or the like, to provide secure retention at a selected position. Release buttons **308,** biased toward the locked position, may be manually depressed to disengage the locking members to allow sliding movement of the carriage **300** in the fore and aft direction until the viewing device **110** is positioned at a desired focal position in front of the user's eye(s) **118.** The sliding carriage **300** also includes a mount receptacle **312** for receiving a mounting member, such as a dovetail mounting shoe or the like, on the viewing device **110.**

The bushing **216** is received within the cylindrical bore **202** of the hinge barrel 200. A shaped opening **320** is formed in the hinge barrel **200.** The protruding head **276** of the positioning pin **268** rides in the shaped opening **320** and constrains pivoting movement of the hinge barrel **200** in relation to the helmet interface assembly **120.** Optional elastomeric rings (e.g., O-rings) (not shown) may be disposed within annular channels **324** on the bushing **216** to provide a desired degree of friction between the hinge barrel **200** and the bushing **216.**

A locking detent assembly **328** is carried within a detent interface **332** on the pivot arm **280.** The detent interface **332** defines a detent bore **336** which is generally perpendicular or radially extending with respect to the pivot axis **208** and extends through the detent interface **332** to the bore **202** of the hinge barrel **200.** The perpendicular bore **336** is axially aligned with a detent groove **340** on the outward facing surface of the bushing **216.**

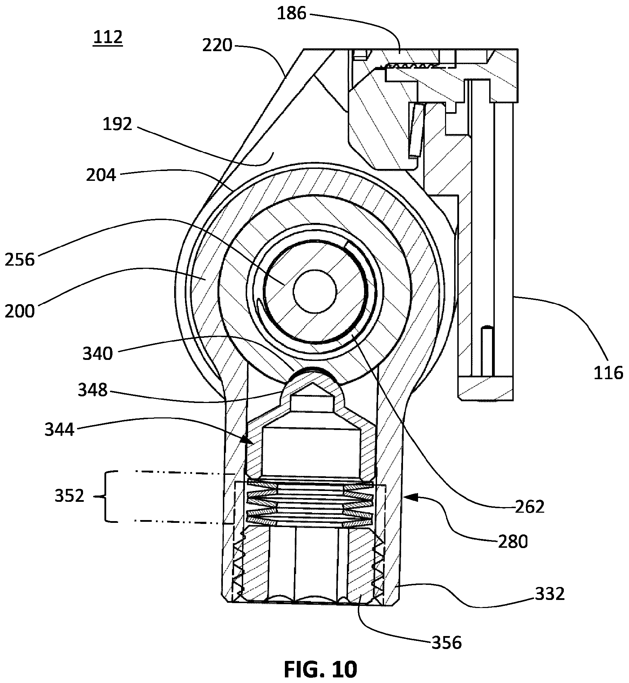

The locking detent assembly **328** includes a detent member **344,** e.g., a cylindrical detent member, having a tongue **348** disposed on an upper surface. The detent member **344** is received within the bore **336.** The tongue **348** is complementary with the detent groove **340.** The tongue **348** and/or the detent groove **340** may have rounded or chamfered edges to facilitate movement of the detent tongue **348** into and out of engagement with the detent groove **340.** In certain embodiments, as best seen in FIG. 10, the channel **340** has a first curved radius and the detent tongue **348** has a second radius, wherein the radius of the detent tongue **348** is slightly larger than the radius of the channels **340.**

One or more detent spring members **352** are captured within the bore **336** between detent member **344** and a threaded set screw **356.** The threaded set screw **356** engages internal threads within the end of the bore **336.** In the illustrated embodiment, the spring members **352** comprise a stack of Belleville washers. The spring members **352** urge the detent member **344** toward the bushing **216.** The set screw **356** may be rotated to selectively advance or retract the set screw **356** within the bore **336** to adjust the force with which the detent member **344** bears against the bushing **216.**

In certain embodiments, a soft-tipped set screw (not shown) in the hinge barrel **200** is provided to eliminate looseness or rattle between the hinge barrel **200** and the bushing **216,** e.g., as may occur over time through wear. However, in certain embodiments, the hinge barrel **200** does not include a soft-tipped set screw. Since the detent member **344** bears resiliently against the bushing **216,** there is not a need to utilize a soft-tipped set screw for the purpose of eliminating looseness or rattle between the hinge barrel **200** and the bushing **216.** It will be recognized, however, that in certain embodiments, a soft tipped set screw in the hinge barrel **200** and bearing against the bushing **216** may be desired, e.g., to provide a further adjustment of the friction or resistance to rotation between the hinge barrel **200** and the bushing **216.**

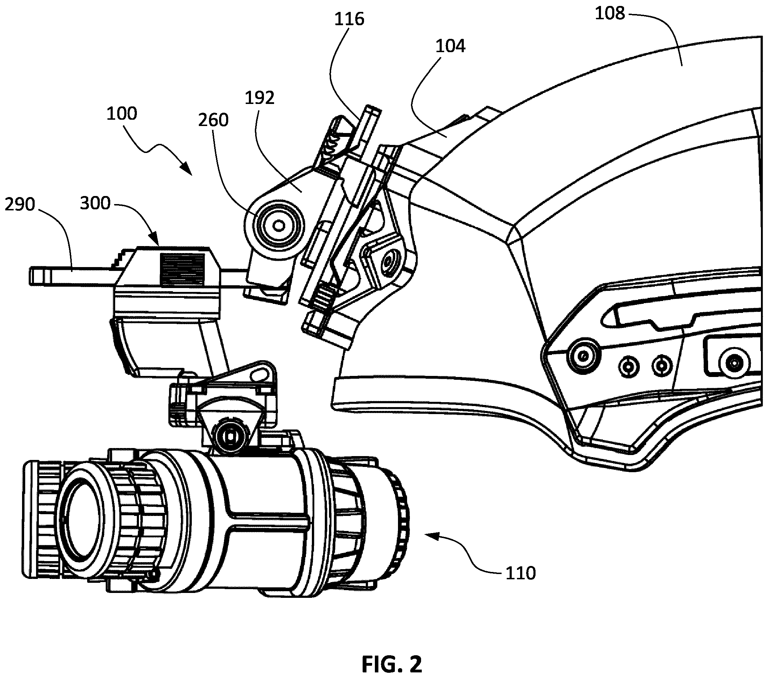

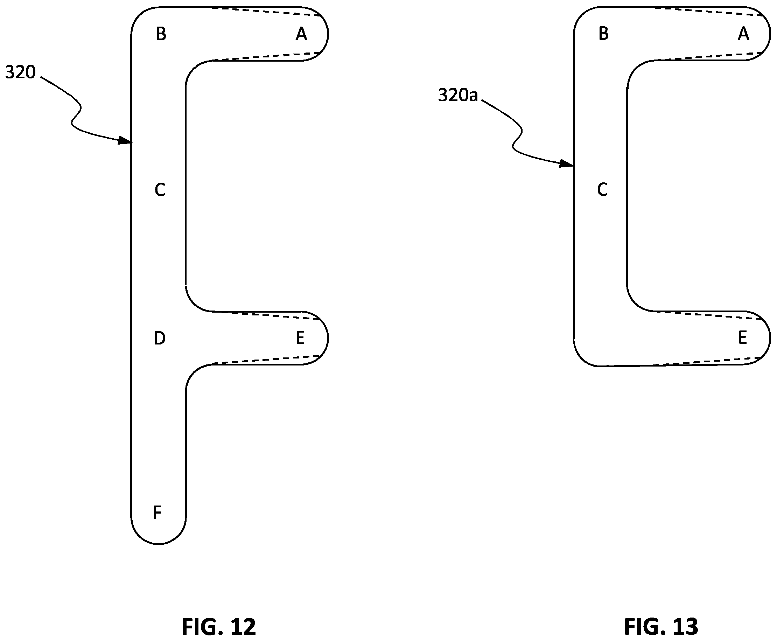

Referring now to FIG. 12, the layout of an exemplary embodiment of the pin guide opening **320** is illustrated, wherein the pin guide opening **320** has a generally F-shaped configuration, having designated positions identified as positions A-F. When the positioning pin **268** is in position A, the hinge barrel **200** is in the deployed position as shown in FIGS. 1 and 2, i.e., wherein the slide carriage rails **290** are substantially horizontal and the device **110** is in front of the eye(s) of the user. When the positioning pin **268** is in position A, the pivot sub-assembly acts as a locking pivot and requires that the button **260** to be manually depressed to rotate the hinge barrel **200** to another rotational position. In position A, the spring **262** bears against the pivot rod **256** to retain the positioning pin **268** in position. In operation, position A is advantageously used in dark or low light conditions.

When it is desired to pivot the pivot arm **280** upward to move an attached device **110** above the user's line of sight, the button **260** is manually depressed against the urging of the biasing spring **262** to cause the positioning pin **268** to move to position B. The viewing device is then manually pushed upward, wherein the hinge barrel **200** pivots until the positioning pin **268** reaches position C. Since the bushing **216** is prevented from rotating by the positioning pin **268,** the bushing remains in a fixed position as the hinge barrel **200** is rotated. In operation, position C is advantageously used during mixed lighting conditions when constant night vision deployment is not desirable.

When the hinge barrel **200** is rotated such that the positioning pin **268** reaches the position C, the detent tongue **348** is in angular alignment with the detent groove **340** on the bushing **216** and the spring members **352** urge the detent tongue **348** into the detent groove **340.** The detent groove **340** has an angular position on the bushing **216** such that when the positioning pin **268** reaches the position C, the hinge barrel **200** is pivoted partially upward with respect to the deployed position, i.e., so that the slide carriage rails **290** are angled upward relative to horizontal as illustrated in FIG. 3. In embodiments, the upward angle of the slide carriage rails **290** when the detent tongue **348** engages the detent groove **340** is sufficient to move an attached device **110** above a line of sight of the user.

In embodiments the rotational angle of the hinge barrel **200** about the pivot axis **208** between the deployed position and the intermediate position wherein the detent tongue **348** engages the detent groove **340** is in the range of from about 7 to about 30 degrees (e.g., 7, 8, 9, 10, 11, 12, 13, 14, 15, 16, 17, 18, 19, 20, 21, 22, 23, 24, 25, 26, 27, 28, 29, or 30 degrees. In embodiments, such angle is in the range of from about 10 to about 25 degrees. In embodiments, such rotational angle is in the range of from about 15 to about 20 degrees. In embodiments, such rotational angle is about 20 degrees.

When the positioning pin **268** is in the position C and the detent tongue **348** engages the detent groove **340,** the pivot sub-assembly **112** acts as a force to overcome type mechanism, wherein the user has the option of manually pushing upward to cause the positioning pin **268** to move back to position B or manually pulling downward to cause the positioning pin **268** to move to position D. If the user pushes upward with sufficient force to overcome the force of the locking detent assembly **328,** the positioning pin **268** moves back to position B, whereupon the biasing spring **262** urges the pivot pin **252** outwardly and the positioning pin **268** automatically returns to position A.

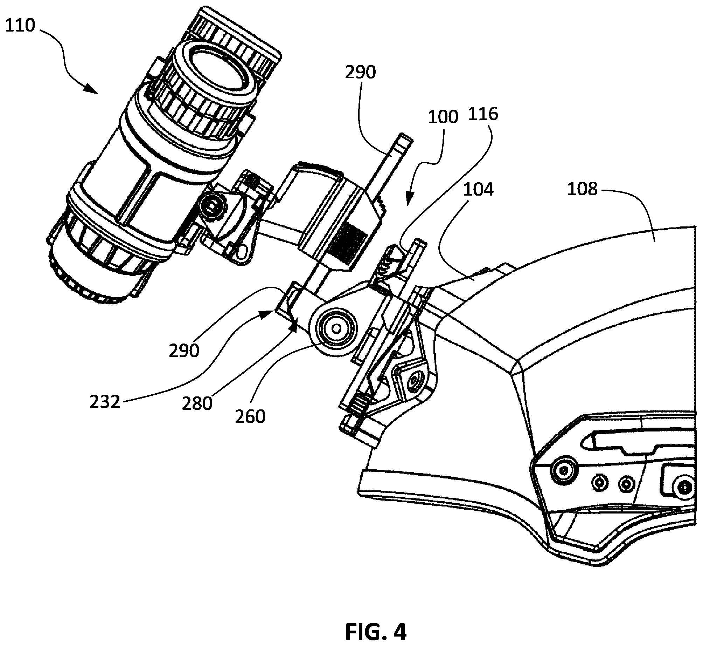

If the user pushes downward with sufficient force to overcome the force of the locking detent assembly **328,** the positioning pin **268** moves to position D, whereupon the biasing spring **262** urges the pivot pin **252** outwardly and the positioning pin **268** automatically moves to position E. When the positioning pin **268** is in position E, the hinge barrel **200** is in the stowed position as shown in FIG. 4. When the positioning pin **268** is in position E, the pivot assembly **112** again acts as a locking pivot and requires the button **260** to be manually depressed against the bias of the spring **262** in order to further change the pivot position. When the positioning pin **268** is moved back to position D via the push button **260,** the user has the option of pulling downward to cause the positioning pin **268** to move back to position C or pushing upward to cause the positioning pin **268** to move to position F. If the user pulls downward to cause the positioning pin **268** to move back to position C, further pivoting is as described above. If the positioning pin **268** is in position D and the user pushes upward to cause the positioning pin **268** to move to position F, the attached viewing device **110** will be moved upward beyond the stowed position as shown in FIG. 4, i.e., further toward the helmet.

In certain embodiments, the pivot assembly **112** does not include an integrated retention mechanism for automatically securing the pivot assembly in position with the positioning pin at position F. Rather, when the user elects to manually pivot the viewing device upward, so that the positioning pin **268** is in position F, the user has the option to fasten the viewing device in this position with a bungee, strap, or other fastener which is external to the pivot assembly **112.** To change the position when the positioning pin **268** is in position F, the user may disengage the bungee, strap, or other fastener such that the unit will pivot downward, e.g., under the influence of gravity. As the unit is pivoting downward, when the positioning pin **268** moves back to position D, the biasing spring **262** urges the pivot pin **252** outwardly and the positioning pin **268** automatically returns to position E. Any further movements can then be performed as described above.

In certain embodiments, the segment A-B of the shaped openings **320** (FIG. 12) and **320a** (FIG. 13) may be tapered such that it narrows toward position A and widens toward position B, and wherein the segment D-E narrows toward position E and widens toward position D. Such tapering provides a wedging action on the positioning pin **268** and provides ease of operation during the pivoting operation, e.g., by providing additional clearance when the positioning pin **268** is in the segment B-F (see FIG. 12) or B-D (see FIG. 13).

Referring now to FIG. 13, there is shown an alternative shaped opening **320a** which is as described above by way of reference to the shaped opening **320** appearing in FIG. 12 except that the position F is eliminated.

The invention has been described with reference to the preferred embodiments. Modifications and alterations will occur to others upon a reading and understanding of the preceding detailed description. It is intended that the invention be construed as including all such modifications and alterations insofar as they come within the scope of the appended claims.

## Claims

1. A pivot assembly (112) for pivoting a viewing device (110) in relation to a helmet (108), the pivot assembly (112) comprising:
a connection plate (116) configured to be coupled to a helmet interface assembly (120);
a hinge barrel (200) pivotable about a pivot axis (208) in relation to said connection plate (116) among (a) a deployed position in which said hinge barrel (200) is held relative to said connection plate (116) in positive, locking retention; (b) a stowed position in which said hinge barrel (200) is held relative to said connection plate (116) in positive, locking retention; and **characterized by** further comprising (c) an intermediate position between said deployed and stowed positions,
wherein said hinge barrel (200) is held relative to said connection plate (116) by a threshold retentive force and wherein displacement of the hinge barrel (200) from the intermediate position relative to the connection plate (116) requires application of an actuating force which exceeds the threshold retentive force.

2. The pivot assembly (112) of claim 1, further comprising:
first and second hinge knuckles (192) disposed on opposing transverse sides of said connection plate (116);
said hinge barrel (200) disposed between said first and second hinge knuckles (192), said hinge barrel (200) defining a cylindrical bore (202) along said pivot axis (208);
a first aperture (320) formed in a sidewall of the hinge barrel (200) which provides access to the cylindrical bore (202);
a pivot arm (280) coupled to the hinge barrel (200) and configured to rotate with the hinge barrel (200) about the pivot axis (208);
a detent bore (336) extending radially through the pivot arm (280) and communicating with said cylindrical bore (202);
a bushing (216) comprising a cylindrical body and an axially-extending bore, said bushing (216) disposed within the cylindrical bore (202) of the hinge barrel (200), said bushing (216) comprising a recess (340) formed on the cylindrical body and a second aperture (278) formed radially from an outer surface of the cylindrical body to the axially-extending bore, wherein the second aperture (278) is elongated in the axial direction and has a preselected axial extent;
a detent assembly (328) received within the detent bore (336), said detent assembly (328) comprising a resilient protrusion (344), said resilient protrusion (344) complementary with said recess (340);
a pivot rod (252) telescopically received within said axially-extending bore;
a biasing spring (262) disposed within said axially-extending bore and configured to urge said pivot rod (252) in an outward direction along said pivot axis (208); and
a positioning pin (268) secured to said pivot rod (252) and passing through said second aperture (278) and extending at least partially into said first aperture (320), wherein the second aperture (278) is configured to limit telescoping movement between the pivot rod (252) and the bushing (216) to said axial extent and wherein the first aperture (320) is configured to constrain a range of rotational movement of the hinge barrel (200) in relation to the bushing (216) when the hinge barrel (200) is pivoted between the deployed, intermediate, and stowed positions.

3. The pivot assembly (112) of claim 2, wherein the detent assembly (328) comprises:
a detent member (344) received within said detent bore (336), said detent member (344) having a tongue (348) disposed on an upper surface;
a threaded set screw (356) that engages internal threads within said detent bore (336); and
at least one detent spring member (352) captured within said detent bore (336) between said detent member (344) and said threaded set screw (356), such that said at least one detent spring member (352) urges said detent member (344) away from said threaded set screw (356) and toward said bushing (216).

4. The pivot assembly (112) of claim 2 or claim 3, wherein said pivot rod (252) comprises a shaft portion (256) received within the axially-extending bore and a manually actuatable push button (260).

5. The pivot assembly (112) of any of claims 2-4, wherein the first aperture (320) comprises:
a first segment which extends parallel to the pivot axis (208) and having a first end and a second end opposite the first end;
a second segment which extends parallel to the pivot axis (208) and having a first end and a second end opposite the first end, the second segment axially aligned with the first segment and angularly spaced apart from the first segment; and
a third segment which extends transversely with respect to the pivot axis (208), the third segment intersecting with the second end of the first segment and the second end of the second segment.

6. The pivot assembly (112) of claim 5, further comprising:
said biasing spring (252) configured to urge the positioning pin (268) toward the first end of the first segment when the hinge barrel (200) is pivoted to the deployed position;
said biasing spring (252) configured to urge the positioning pin (268) toward the first end of the second segment when the hinge barrel (200) is pivoted to the stowed position.

7. The pivot assembly (112) of claim 6, further comprising:
said resilient protrusion (344) configured to engage said recess (340) when the hinge barrel (200) is manually pivoted to the intermediate position, wherein the positioning pin (268) is disposed within said third segment at a position intermediate the second end of the first segment and the second end of the second segment.

8. The pivot assembly (112) of claim 6 or claim 7, wherein said first segment is tapered to narrow toward the first end of the first segment and the second segment is tapered to narrow toward the first end of the second segment.

9. The pivot assembly (112) of any of the preceding claims, further comprising:
a carriage assembly (302) coupled to the hinge barrel (200), the carriage assembly (302) configured to interface with the viewing device (110).

10. The pivot assembly (112) of claim 9, wherein the carriage assembly (302) comprises one or more rail members (290) secured to the hinge barrel (200) and a sliding carriage (300) configured to be selectively positioned on said one or more rail members (290) for adjusting a distance between the viewing device (110) and an eye of a user.

11. The pivot assembly (112) of any of the preceding claims, further comprising:
a helmet interface assembly (120) coupled to the connection plate (116), the helmet interface assembly (120) configured to secure the pivot assembly (112) to a helmet (108).

12. The pivot assembly (112) of any of the preceding claims, the helmet interface assembly (120) comprising:
a front interface plate (128) disposed coupled to said connection plate (116), said front interface plate (128) comprising vertical adjustment rails (168) defining a channel (188);
a cam lock member disposed on a rear, helmet-facing side of said connection plate (116), said cam lock member received within said channel (188);
a vertical adjustment lever (184) disposed on a forward facing side of said connection plate (116), the vertical adjustment lever (184) secured to said cam lock member and rotatable between a locked position and an unlocked position;
said cam lock member configured to slide within said channel (188) when the vertical adjustment lever (184) is in the unlocked position; and
said cam lock member configured to be held in place within said channel (188) when the vertical adjustment lever (184) is in the locked position.

13. The pivot assembly (112) of any of the preceding claims, wherein the helmet interface assembly (120) includes a breakaway mechanism (132) configurable between a non-breakaway configuration and a breakaway configuration, wherein said helmet interface assembly (120) is configured to securely lock to a mounting fixture disposed on the helmet (108) when the breakaway mechanism (132) is in the non-breakaway configuration and wherein the helmet interface assembly (120) is configured to separate from the mounting fixture upon application of a predetermined force when the breakaway mechanism (132) is in the breakaway configuration.

14. The pivot assembly (112) of any of the preceding claims, further comprising a tilt adjustment assembly (212) for adjusting a tilt position of the viewing device (110) relative to an eye of a user.

15. A helmet mount apparatus (100) for a viewing device (110), the helmet mount apparatus (100) comprising:
a helmet interface assembly (120) configured to engage with a helmet (108);
the pivot assembly (112) of any of claims 1-14 coupled to the helmet interface assembly (120);
a carriage assembly (302) coupled to the pivot assembly (112), the carriage assembly (302) configured to engage with the viewing device (110); and
optionally, the viewing device (110).

## Patentansprüche

1. Schwenkbaugruppe (112) zum Schwenken eines Sichtgeräts (110) in Bezug auf einen Helm (108), wobei die Schwenkbaugruppe (112) Folgendes umfasst:
eine Verbindungsplatte (116), die dazu konfiguriert ist, an eine Helmschnittstellenbaugruppe (120) gekoppelt zu sein;
einen Scharnierzylinder (200), der um eine Schwenkachse (208) in Bezug auf die Verbindungsplatte (116) zwischen (a) einer ausgefahrenen Position, in der der Scharnierzylinder (200) relativ zu der Verbindungsplatte (116) formschlüssig verriegelt gehalten wird; (b) einer eingefahrenen Position, in der der Scharnierzylinder (200) relativ zu der Verbindungsplatte (116) formschlüssig verriegelt gehalten wird, schwenkbar ist; und
**dadurch gekennzeichnet, dass** er ferner (c) eine Zwischenposition zwischen der ausgefahrenen und der eingefahrenen Position, umfasst, wobei der Scharnierzylinder (200) relativ zu der Verbindungsplatte (116) durch eine Schwellenhaltekraft gehalten wird und wobei eine Verschiebung des Scharnierzylinders (200) aus der Zwischenposition relativ zu der Verbindungsplatte (116) die Ausübung einer Betätigungskraft erfordert, die die Schwellenhaltekraft übersteigt.

2. Schwenkbaugruppe (112) nach Anspruch 1, ferner umfassend:
ein erstes und ein zweites Scharniergelenk (192), die auf gegenüberliegenden Querseiten der Verbindungsplatte (116) angeordnet sind;
wobei der Scharnierzylinder (200) zwischen dem ersten und zweiten Scharniergelenk (192) angeordnet ist und der Scharnierzylinder (200) eine zylindrische Bohrung (202) entlang der Schwenkachse (208) definiert;
eine erste Öffnung (320), die in einer Seitenwand des Scharnierzylinders (200) ausgebildet ist und Zugang zu der zylindrischen Bohrung (202) bereitstellt;
einen Schwenkarm (280), der an den Scharnierzylinder (200) gekoppelt ist und dazu konfiguriert ist, sich mit dem Scharnierzylinder (200) um die Schwenkachse (208) zu drehen;
eine Rastbohrung (336), die sich radial durch den Schwenkarm (280) erstreckt und mit der zylindrischen Bohrung (202) in Verbindung steht;
eine Buchse (216), die einen zylindrischen Körper und eine sich axial erstreckende Bohrung umfasst, wobei die Buchse (216) innerhalb der zylindrischen Bohrung (202) des Scharnierzylinders (200) angeordnet ist und die Buchse (216) eine Aussparung (340), die in dem zylindrischen Körper ausgebildet ist, und eine zweite Öffnung (278), die radial von einer Außenoberfläche des zylindrischen Körpers zu der sich axial erstreckenden Bohrung ausgebildet ist, umfasst, wobei die zweite Öffnung (278) in der radialen Richtung länglich ist und eine vorausgewählte axiale Ausdehnung aufweist;
eine Rastbaugruppe (328), die innerhalb der Rastbohrung (336) aufgenommen ist, wobei die Rastbaugruppe (328) einen elastischen Vorsprung (344) umfasst, wobei der elastische Vorsprung (344) mit der Aussparung (340) komplementär ist;
eine Schwenkstange (252), die teleskopartig innerhalb der sich axial erstreckenden Bohrung aufgenommen ist;
eine Vorspannfeder (262), die innerhalb der sich axial erstreckenden Bohrung angeordnet ist und dazu konfiguriert ist, die Schwenkstange (252) entlang der Schwenkachse (208) in einer Richtung nach außen zu drücken; und
einen Positionierstift (268), der an der Schwenkstange (252) befestigt ist und durch die zweite Öffnung (278) verläuft und sich mindestens teilweise in die erste Öffnung (320) erstreckt, wobei die zweite Öffnung (278) dazu konfiguriert ist, Teleskopbewegung zwischen der Schwenkstange (252) und der Buchse (216) auf die axiale Ausdehnung zu begrenzen, und wobei die erste Öffnung (320) dazu konfiguriert ist, einen Bereich der Drehbewegung des Scharnierzylinders (200) in Bezug auf die Buchse (216) zu beschränken, wenn der Scharnierzylinder (200) zwischen der ausgefahrenen, der Zwischen- und der eingefahrenen Position geschwenkt wird.

3. Schwenkbaugruppe (112) nach Anspruch 2, wobei die Rastbaugruppe (328) Folgendes umfasst:
ein Rastelement (344), das innerhalb der Rastbohrung (336) aufgenommen ist, wobei das Rastelement (344) eine Zunge (348) aufweist, die auf einer oberen Oberfläche angeordnet ist;
eine mit Gewinde versehene Sicherungsschraube (356), die in Innengewinde innerhalb der Rastbohrung (336) eingreift; und
mindestens ein Rastfederelement (352), das innerhalb der Rastbohrung (336) zwischen dem Rastelement (344) und der mit Gewinde versehenen Sicherungsschraube (356) ergriffen ist, sodass das mindestens eine Rastfederelement (352) das Rastelement (344) von der mit Gewinde versehenen Sicherungsschraube (356) weg und hin zu der Buchse (216) drückt.

4. Schwenkbaugruppe (112) nach Anspruch 2 oder 3, wobei die Schwenkstange (252) einen Wellenabschnitt (256), der innerhalb der sich axial erstreckenden Bohrung aufgenommen ist, und einen manuell betätigbaren Druckknopf (260) umfasst.

5. Schwenkbaugruppe (112) nach einem der Ansprüche 2 bis 4, wobei die erste Öffnung (320) Folgendes umfasst:
ein erstes Segment, das sich parallel zu der Schwenkachse (208) erstreckt und ein erstes Ende und ein zweites Ende gegenüber dem ersten Ende aufweist;
ein zweites Segment, das sich parallel zu der Schwenkachse (208) erstreckt und ein erstes Ende und ein zweites Ende gegenüber dem ersten Ende aufweist, wobei das zweite Segment axial mit dem ersten Segment ausgerichtet und winklig von dem ersten Segment beabstandet ist; und
ein drittes Segment, das sich quer bezüglich der Schwenkachse (208) erstreckt, wobei das dritte Segment das zweite Ende des ersten Segments und das zweite Ende des zweiten Segments schneidet.

6. Schwenkbaugruppe (112) nach Anspruch 5, ferner umfassend:
die Vorspannfeder (252), die dazu konfiguriert ist, den Positionierungsstift (268) hin zu dem ersten Ende des ersten Segments zu drücken, wenn der Scharnierzylinder (200) in die ausgefahrene Position geschwenkt ist;
die Vorspannfeder (252), die dazu konfiguriert ist, den Positionierungsstift (268) hin zu dem ersten Ende des zweiten Segments zu drücken, wenn der Scharnierzylinder (200) in die eingefahrene Position geschwenkt ist.

7. Schwenkbaugruppe (112) nach Anspruch 6, ferner umfassend:
den elastischen Vorsprung (344), der dazu konfiguriert ist, in die Aussparung (340) einzugreifen, wenn der Scharnierzylinder (200) manuell in die Zwischenposition geschwenkt ist, wobei der Positionierungsstift (268) innerhalb des dritten Segments an einer Position zwischen dem zweiten Ende des ersten Segments und dem zweiten Ende des zweiten Segments angeordnet ist.

8. Schwenkbaugruppe (112) nach Anspruch 6 oder 7, wobei sich das erste Segment zu dem ersten Ende des ersten Segments hin verjüngt und sich das zweite Segment zu dem ersten Ende des zweiten Segments hin verjüngt.

9. Schwenkbaugruppe (112) nach einem der vorhergehenden Ansprüche, ferner umfassend:
eine Schlittenbaugruppe (302), die an den Scharnierzylinder (200) gekoppelt ist, wobei die Schlittenbaugruppe (302) dazu konfiguriert ist, mit dem Sichtgerät (110) zu interagieren.

10. Schwenkbaugruppe (112) nach Anspruch 9, wobei die Schlittenbaugruppe (302) ein oder mehrere Schienenelemente (290), die an dem Scharnierzylinder (200) befestigt sind, und einen gleitenden Schlitten (300) umfasst, der dazu konfiguriert ist, selektiv auf dem einen oder den mehreren Schienenelementen (290) positioniert zu werden, um einen Abstand zwischen dem Sichtgerät (110) und einem Auge eines Benutzers einzustellen.

11. Schwenkbaugruppe (112) nach einem der vorhergehenden Ansprüche, ferner umfassend:
eine Helmschnittstellenbaugruppe (120), die an die Verbindungsplatte (116) gekoppelt ist, wobei die Helmschnittstellenbaugruppe (120) dazu konfiguriert ist, die Schwenkbaugruppe (112) an einem Helm (108) zu befestigen.

12. Schwenkbaugruppe (112) nach einem der vorhergehenden Ansprüche, wobei die Helmschnittstellenbaugruppe (120) Folgendes umfasst:
eine vordere Schnittstellenplatte (128), die gekoppelt an die Verbindungsplatte (116) angeordnet ist, wobei die vordere Schnittstellenplatte (128) vertikale Verstellschienen (168) umfasst, die einen Kanal (188) definieren;
ein Nockenverriegelungselement, das an einer hinteren, dem Helm zugewandten Seite der Verbindungsplatte (116) angeordnet ist, wobei das Nockenverriegelungselement innerhalb des Kanals (188) aufgenommen ist;
einen vertikalen Verstellhebel (184), der an einer nach vorn gerichteten Seite der Verbindungsplatte (116) angeordnet ist, wobei der vertikale Verstellhebel (184) an dem Nockenverriegelungselement befestigt und zwischen einer verriegelten Position und einer entriegelten Position drehbar ist;
wobei das Nockenverriegelungselement dazu konfiguriert ist, innerhalb des Kanals (188) zu gleiten, wenn der vertikale Verstellhebel (184) in der entriegelten Position ist; und
wobei das Nockenverriegelungselement dazu konfiguriert ist, innerhalb des Kanals (188) an Ort und Stelle gehalten zu werden, wenn der vertikale Verstellhebel (184) in der verriegelten Position ist.

13. Schwenkbaugruppe (112) nach einem der vorhergehenden Ansprüche, wobei die Helmschnittstellenbaugruppe (120) einen Losbruchmechanismus (132) beinhaltet, der zwischen einer Nicht-Losbruchkonfiguration und einer Losbruchkonfiguration konfigurierbar ist, wobei die Helmschnittstellenbaugruppe (120) dazu konfiguriert ist, sich sicher an einer an dem Helm (108) angeordneten Befestigungshalterung zu verriegeln, wenn der Losbruchmechanismus (132) in der Nicht-Losbruchkonfiguration ist, und wobei die Helmschnittstellenbaugruppe (120) dazu konfiguriert ist, sich bei Ausübung einer vorbestimmten Kraft von der Befestigungshalterung zu trennen, wenn der Losbruchmechanismus (132) in der Losbruchkonfiguration ist.

14. Schwenkbaugruppe (112) nach einem der vorhergehenden Ansprüche, ferner umfassend eine Neigungsverstellbaugruppe (212) zum Einstellen einer Neigungsposition des Sichtgeräts (110) relativ zu einem Auge eines Benutzers.

15. Helmmontagevorrichtung (100) für ein Sichtgerät (110), wobei die Helmmontagevorrichtung (100) Folgendes umfasst:
eine Helmschnittstellenbaugruppe (120), die dazu konfiguriert ist, mit einem Helm (108) in Eingriff zu kommen;
die Schwenkbaugruppe (112) nach einem der Ansprüche 1 bis 14, die an die Helmschnittstellenbaugruppe (120) gekoppelt ist;
eine Schlittenbaugruppe (302), die an die Schwenkbaugruppe (112) gekoppelt ist, wobei die Schlittenbaugruppe (302) dazu konfiguriert ist, mit dem Sichtgerät (110) in Eingriff zu kommen; und
optional das Sichtgerät (110).

## Revendications

1. Ensemble (112) de pivot pour faire pivoter un dispositif (110) de vision par rapport à un casque (108), l'ensemble (112) de pivot comprenant :
une plaque (116) de liaison configurée pour être couplée à un ensemble (120) d'interface de casque ;
un barillet (200) de charnière pivotant autour d'un axe (208) de pivot par rapport à ladite plaque (116) de liaison parmi (a) une position déployée dans laquelle ledit barillet (200) de charnière est maintenu par rapport à ladite plaque (116) de liaison dans une retenue de verrouillage positive ; (b) une position rangée dans laquelle ledit barillet (200) de charnière est maintenu par rapport à ladite plaque (116) de liaison dans une retenue de verrouillage positive ; et **caractérisé en ce qu'**il comprend en outre (c) une position intermédiaire entre lesdites positions déployée et rangée, dans laquelle ledit barillet (200) de charnière est maintenu par rapport à ladite plaque (116) de liaison par une force de rétention seuil et dans laquelle le déplacement du barillet (200) de charnière depuis la position intermédiaire par rapport à la plaque (116) de liaison requiert l'application d'une force d'actionnement supérieure à la force de rétention seuil.

2. Ensemble (112) de pivot selon la revendication 1, comprenant en outre :
des premier et second charnons (192) disposés sur les côtés transversaux opposés de ladite plaque (116) de liaison ;
ledit barillet (200) de charnière disposé entre lesdits premier et deuxième charnons (192), ledit barillet (200) de charnière définissant un alésage (202) cylindrique le long dudit axe (208) de pivot ;
une première ouverture (320) formée dans une paroi latérale du barillet (200) de charnière qui fournit un accès à l'alésage (202) cylindrique ;
un bras (280) de pivot couplé au barillet (200) de charnière et configuré pour tourner avec le barillet (200) de charnière autour de l'axe (208) de pivot ;
un alésage (336) de retenue s'étendant radialement à travers le bras (280) de pivot et communiquant avec ledit alésage (202) cylindrique ;
une douille (216) comprenant un corps cylindrique et un alésage s'étendant axialement, ladite douille (216) disposée dans l'alésage (202) cylindrique du barillet (200) de charnière, ladite douille (216) comprenant un évidement (340) formé sur le corps cylindrique et une seconde ouverture (278) formée radialement à partir d'une surface externe du corps cylindrique jusqu'à l'alésage s'étendant axialement, dans laquelle la seconde ouverture (278) est allongée dans la direction axiale et a une extension axiale présélectionnée ;
un ensemble (328) de retenue reçu dans l'alésage (336) de retenue, ledit ensemble (328) de retenue comprenant une saillie (344) élastique, ladite saillie (344) élastique étant complémentaire dudit évidement (340) ;
une tige (252) de pivot reçue télescopiquement à l'intérieur dudit alésage s'étendant axialement ;
un ressort (262) de sollicitation disposé à l'intérieur dudit alésage s'étendant axialement et configuré pour pousser ladite tige (252) de pivot vers une direction extérieure le long dudit axe (208) de pivot ; et
une goupille (268) de positionnement fixée à ladite tige (252) de pivot et passant à travers ladite seconde ouverture (278) et s'étendant au moins partiellement dans ladite première ouverture (320), dans laquelle la seconde ouverture (278) est configurée pour limiter le mouvement télescopique entre la tige (252) de pivot et la douille (216) à ladite extension axiale et dans laquelle la première ouverture (320) est configurée pour contraindre une plage de mouvement de rotation du barillet (200) de charnière par rapport à la douille (216) lorsque le barillet (200) de charnière est pivoté entre les positions déployée, intermédiaire et rangée.

3. Ensemble (112) de pivot selon la revendication 2, dans lequel l'ensemble (328) de retenue comprend :
un organe (344) de retenue reçu dans ledit alésage (336) de retenue, ledit organe (344) de retenue ayant une languette (348) disposée sur une surface supérieure ;
une vis (356) de réglage filetée qui vient en prise dans le filetage interne dudit alésage (336) de retenue ; et
au moins un organe (352) de ressort de retenue capturé dans ledit alésage (336) de retenue entre ledit organe (344) de retenue et ladite vis (356) de réglage filetée, de sorte que ledit au moins un organe (352) de ressort de retenue pousse ledit organe (344) de retenue loin de ladite vis (356) de réglage filetée et vers ladite douille (216).

4. Ensemble (112) de pivot selon la revendication 2 ou la revendication 3, dans lequel ladite tige (252) de pivot comprend une partie (256) d'arbre reçue dans l'alésage s'étendant axialement et un bouton-poussoir (260) actionnable manuellement.

5. Ensemble (112) de pivot selon l'une quelconque des revendications 2 à 4, dans lequel la première ouverture (320) comprend :
un premier segment qui s'étend parallèlement à l'axe (208) de pivot et qui a une première extrémité et une seconde extrémité opposée à la première extrémité ;
un deuxième segment qui s'étend parallèlement à l'axe (208) de pivot et qui a une première extrémité et une seconde extrémité opposée à la première extrémité, le deuxième segment étant aligné axialement avec le premier segment et espacé angulairement du premier segment ; et
un troisième segment qui s'étend transversalement par rapport à l'axe (208) de pivot, le troisième segment croisant la seconde extrémité du premier segment et la seconde extrémité du deuxième segment.

6. Ensemble (112) de pivot selon la revendication 5, comprenant en outre :
ledit ressort (252) de sollicitation configuré pour pousser la goupille (268) de positionnement vers la première extrémité du premier segment lorsque le barillet (200) de charnière est pivoté en position déployée ;
ledit ressort (252) de sollicitation configuré pour pousser la goupille (268) de positionnement vers la première extrémité du deuxième segment lorsque le barillet (200) de charnière est pivoté en position rangée.

7. Ensemble (112) de pivot selon la revendication 6, comprenant en outre :
ladite saillie (344) élastique configurée pour venir en prise dans ledit évidement (340) lorsque le barillet (200) de charnière est pivoté manuellement vers la position intermédiaire, dans laquelle la goupille (268) de positionnement est disposée à l'intérieur dudit troisième segment à une position intermédiaire entre la seconde extrémité du premier segment et la seconde extrémité du deuxième segment.

8. Ensemble (112) de pivot selon la revendication 6 ou la revendication 7, dans lequel ledit premier segment est effilé pour se rétrécir vers la première extrémité du premier segment et le deuxième segment est effilé pour se rétrécir vers la première extrémité du deuxième segment.

9. Ensemble (112) de pivot selon l'une quelconque des revendications précédentes, comprenant en outre :
un ensemble (302) chariot couplé au barillet (200) de charnière, l'ensemble (302) chariot étant configuré pour s'interfacer avec le dispositif (110) de vision.

10. Ensemble (112) de pivot selon la revendication 9, dans lequel l'ensemble (302) chariot comprend un ou plusieurs organes (290) de rail fixés au barillet (200) de charnière et un chariot (300) coulissant configuré pour être positionné sélectivement sur lesdits un ou plusieurs organes (290) de rail pour ajuster une distance entre le dispositif (110) de vision et l'œil d'un utilisateur.

11. Ensemble (112) de pivot selon l'une quelconque des revendications précédentes, comprenant en outre :
un ensemble (120) d'interface de casque couplé à la plaque (116) de liaison, l'ensemble (120) d'interface de casque étant configuré pour fixer l'ensemble (112) de pivot à un casque (108).

12. Ensemble (112) de pivot selon l'une quelconque des revendications précédentes, l'ensemble (120) d'interface de casque comprenant :
une plaque (128) d'interface avant disposée couplée à ladite plaque (116) de liaison, ladite plaque (128) d'interface avant comprenant des rails (168) de réglage verticaux définissant un canal (188) ;
un organe de verrouillage à came disposé sur un côté arrière, face au casque, de ladite plaque (116) de liaison, ledit organe de verrouillage à came étant reçu dans ledit canal (188) ;
un levier (184) de réglage vertical disposé sur un côté orienté vers l'avant de ladite plaque (116) de liaison, le levier (184) de réglage vertical étant fixé audit organe de verrouillage à came et pouvant tourner entre une position verrouillée et une position déverrouillée ;
ledit organe de verrouillage à came étant configuré pour coulisser dans ledit canal (188) lorsque le levier (184) de réglage vertical est en position déverrouillée ; et
ledit organe de verrouillage à came étant configuré pour être maintenu en place dans ledit canal (188) lorsque le levier (184) de réglage vertical est dans la position verrouillée.

13. Ensemble (112) de pivot selon l'une quelconque des revendications précédentes, dans lequel l'ensemble (120) d'interface de casque comporte un mécanisme (132) de rupture configurable entre une configuration de non-rupture et une configuration de rupture, dans lequel ledit ensemble (120) d'interface de casque est configuré pour se verrouiller solidement à un dispositif de montage disposé sur le casque (108) lorsque le mécanisme (132) de rupture est dans la configuration de non-rupture et dans lequel l'ensemble (120) d'interface de casque est configuré pour se séparer du dispositif de montage lors de l'application d'une force prédéterminée lorsque le mécanisme (132) de rupture est dans la configuration de rupture.

14. Ensemble (112) de pivot selon l'une quelconque des revendications précédentes, comprenant en outre un ensemble (212) de réglage d'inclinaison pour ajuster une position d'inclinaison du dispositif (110) de vision par rapport à l'œil d'un utilisateur.

15. Appareil (100) de montage de casque pour un dispositif (110) de vision, l'appareil (100) de montage de casque comprenant :
un ensemble (120) d'interface de casque configuré pour venir en prise avec un casque (108) ;
l'ensemble (112) de pivot selon l'une quelconque des revendications 1 à 14 couplé à l'ensemble (120) d'interface de casque ;
un ensemble (302) chariot couplé à l'ensemble (112) de pivot, l'ensemble (302) chariot étant configuré pour venir en prise avec le dispositif (110) de visualisation ; et
éventuellement, le dispositif (110) de vision.
